# EUROPEAN PATENT SPECIFICATION

(11) **EP 1 449 871 B1**
(45) Date of publication and mention of the grant of the patent: **14.01.2015**
(21) Application number: 04002674.2
(22) Date of filing: 06.02.2004
(51) Int. Cl.: C08K 13/02, C08L 67/02, C08K 7/00, C08K 3/00, C08K 5/03

(54) **Thermoplastic polyester-based flame-retardant resin composition and molded products thereof**
Thermoplastische flammgeschützte Polyesterharzzusammensetzung und daraus hergestellte Formkörper
Composition thermoplastique ignifuge de resine polyester et produits moules a partir de celle-ci

(30) Priority: 12.02.2003 JP 2003034205
(43) Date of publication of application: 25.08.2004
(73) Proprietor: MITSUBISHI ENGINEERING-PLASTICS CORPORATION, Tokyo 105-0021 (JP)
(72) Inventor: Takise, Osamu Mitsubishi Eng.-Plastics Corp., Hiratsuka, Kanagawa-ken (JP); Saito,Ryo Mitsubishi Eng.-Plastics Corp., Hiratsuka, Kanagawa-ken (JP)
(74) Representative: Hoffmann Eitle

(56) References cited:
- EP-A- 0 386 916
- US-A- 3 671 487
- US-A- 5 712 336
- US-A1- 2003 001 139

## Description

### BACKGROUND OF THE INVENTION

The present invention relates to a thermoplastic polyester-based resin composition, more particularly to a thermoplastic polyester-based resin composition having excellent flame retardancy as well as good fluidity that makes it possible to obtain the exceedingly thin-walled molded products, and to the molded products of this composition.

The thermoplastic polyester resins (which may hereinafter be simply referred to as polyester resins) represented by polybutyrene terephthalate and polyethylene terephthalate are widely used for the electric and electronic parts, automotive electronic parts, machine parts, etc., because these resins excel in mechanical strength, chemical resistance and electrical insulating properties.

In line with the trend toward smaller size and weight of various machines and apparatus in recent years, progress has also been made in the reduction of size and wall thickness of various electric and electronic parts used in such machines and apparatus. For obtaining the thin-walled molded products, further improvement of fluidity of the resin compositions used for such molded products is required. Further, these molded products are required to have high flame retardancy, and in evaluation thereof it is demanded that the thinnest portion of a molded product measures up to the specified level of flame retardancy. Here, flame retardancy of the rank V-O in UL-94 standards becomes an index. Specifically, according to this standards, a strip-shaped test piece is ignited by the flame of a gas burner and it is required that the test piece remains free of flame droppings after removal of the burner flame.

As means for making the thermoplastic resin compositions flame-retardant, a method is widely used in which generally an aromatic compound containing bromine or chlorine is used as flame retardant while using in combination therewith an antimony compound such as antimony oxide as flame retardant assistant, enabling quick extinction on removal of the flame and extinction of the flame droppings during contact with the flame. However, attempts to flame-retard the resin compositions become more difficult as the wall thickness of the molded product is reduced. In the above-mentioned method, it is necessary to blend a flame retardant and its assistant material in large quantities in accordance with thinning of the test piece, giving rise to the problem that even if the objective of flame retarding might be achieved, the thermoplastic resin composition treated could be impaired in its innate mechanical and flow properties or discolored during melt molding. For preventing dropping of burned material during contact with the flame, it is known to add a fluorine-containing polyolefin such as polytetrafluoroethylene or asbestos (see, for example, Japanese Patent Publication (KOKOKU) No. 55-30024). However, addition of a large quantity of a fluorine-containing polyolefin tends to aggravate fluidity of the resin compositions to deteriorate the appearance of the molded products. Also, use of asbestos involves the problem of noxiousness.

Fluidity of the thermoplastic polyester-based resin compositions can be improved by reducing the molecular weight of the resin itself to lower its melt viscosity or by reducing the content of inorganic filler blended for the purpose of affording rigidity and heat resistance to the compositions. When it is attempted to improve fluidity by these methods, however, it is probable that the polyester resins treated by these methods be impaired in their innate mechanical and other properties such as heat resistance to such an extent that they can no longer suit practical use. Further, reduction of the molecular weight of the resin itself leads to a significant fall of the aforementioned flame retarding performance of the composition, especially its ability to prevent flame droppings. It is also notable that a thermoplastic polyester-based resin composition blended with large quantities of a flame-retarding halogenated aromatic compound and an antimony compound as a flame retardant assistant is deteriorated in electrical properties such as arc resistance and tracking resistance. To overcome this problem, compositions blended with silicates, typically talc and clay, have been proposed (Japanese Patent Application Laid-Open (KOKAI) Nos. 51-080351, 53-035753, 2-225555, etc.). In these proposals, however, it is required to blend a silicate in large quantities for obtaining the intended effect, which may lead to deterioration of mechanical properties such as impact resistance and toughness of the molded products. Further, addition of such silicates in large quantities poses the problem that the glowing time in the combustion test is prolonged.

### SUMMARY OF THE INVENTION

An object of the present invention is to provide a thermoplastic polyester-based flame-retardant resin composition which has a good balance of innate properties of thermoplastic polyester resins such as high strength, rigidity, heat resistance and impact resistance, and which is also capable of realizing excellent fluidity and flame retardancy as well as prevention of flame dropping when burned, and to provide the molded products using the said composition.

In the course of studies on the subject matter, the present inventors found that an improvement of flame retardancy could be attained by the combined use of a bromine-containing aromatic compound and antimony oxide while the prevention of flame dropping during contact with flame could be realized by adding polytetrafluoroethylene having fibril-forming properties in large quantities, but it is still impossible with these means to obtain good fluidity envisaged in the prevent invention. Further studies by the present inventors led to the idea to use, together with polytetrafluoroethylene, a lamellar inorganic filler in a specified amount range. It has been found possible with this step to obtain excellent flame retardancy even if the amount of polytetrafluoroethylene is reduced, and to secure preclusion of flame dropping, making it possible to obtain a resin composition with excellent flame retardancy while maintaining innate good fluidity of the resins, and to realize the said object of the invention. The present invention has been attained on the basis of the above finding.

In a first aspect of the present invention, there is provided a thermoplastic polyester-based flame-retardant resin composition comprising (A) 100 parts by weight of a thermoplastic polyester resin, (B) 3 to 50 parts by weight of a bromine-containing aromatic compound, (C) 2 to 30 parts by weight of an antimony oxide compound, (D) 0.1 to 3 parts by weight of polytetrafluoroethylene having fibril-forming abilities, and (E) 0.7 to 8 parts by weight of a lamellar filler, wherein the thermoplastic polyester resin is an aromatic thermoplastic polyester resin and wherein the lamellar filler is an inorganic lamellar filler.

In a second aspect of the present invention, there is provided Molded products having at least one thin-wall portion with a thickness of less than 0.8 mm, obtained by molding the thermoplastic polyester-based resin composition as defined in the above first aspect.

### DETAILED DESCRIPTION OF THE INVENTION

The present invention is explained in detail below. As the thermoplastic polyester resin (A) in the present invention, the known aromatic polyester resins can be used Here, when the term "aromatic polyester resin" is used, it refers to the polyesters having aromatic rings in the polymer chain units, more specifically the polymers or copolymers obtained from the polycondensation reactions using an aromatic dicarboxylic acid or its ester-forming derivative (hereinafter referred to as aromatic dicarboxylic acid moiety) and a diol or its ester-forming derivative (hereinafter referred to as diol moiety) as main reactants. Examples of the ester-forming derivatives are lower alkyl esters such as methyl esters.

As the aromatic dicarboxylic acid moiety, one of the main reactants, it is possible to use, for example, terephthalic acid, isophthalic acid, orthophthalic acid, 1,5-naphthalenedicarboxylic acid, 2,5-naphthalenedicarboxylic acid, 2,6-naphthalenedicarboxylic acid, biphenyl-2,2'-dicarboxylic acid, biphenyl-3,3'-dicarboxylic acid, biphenyl-4,4'-dicarboxylic acid, diphenylether-4,4'-dicarboxylic acid, diphenylmethane-4,4'-dicarboxylic acid, diphenylsulfone-4,4'-dicarboxylic acid, diphenylisopropylidene-4,4'-dicarboxylic acid, 1,2-bis(phenoxy)ethane-4,4'-dicarboxylic acid, anthracene-2,5-dicarboxylic acid, anthracene-2,6-dicarboxylic acid, p-terphenylene-4,4'-dicarboxylic acid, pyridine-2,5-dicarboxylic acid, and their ester-forming derivatives. Terephthalic acid and its ester-forming derivatives are preferably used.

Two or more of these aromatic dicarboxylic acids may be used in admixture. It is also possible to use, if small in quantity, one or more of aliphatic dicarboxylic acids such as adipic acid, azelaic acid, dodecanedione acid, sebacic acid, etc., and their ester-forming derivatives, in combination with the said aromatic dicarboxlic acid moiety.

As the diol moiety, aliphatic diols such as ethylene glycol, propylene glycol, butyrene glycol, hexylene glycol, neopentyl glycol, 2-methylpropane-1,3-diol, diethylene glycol and triethylene glycol, alicyclic diols such as cyclohexane-1,4-dimethanol, and their mixtures can be used. It is also possible to use, if small in quantity, one or more of long-chain diols having a molecular weight of 400 to 6,000, such as polyethylene glycol, poly-1,3-propylene glycol, polytetramethylene glycol, etc.

As the thermoplastic polyester resin (A) used in the present invention, there are exemplified polyethylene terephthalate (PET), polytrimethylene terephthalate (PTT), polybutyrene terephthalate (PBT), polyethylene naphthalate (PEN), polybutyrene naphthalate (PBN), polyethylene-1,2-bis(phenoxy)ethane-4,4'-dicarboxylate and polycyclohexanedimethanol terephthalate. It is also possible to use polyesters prepared by copolymerizing monomers such as isophthalic acid, decanedicarboxylic acid, 4,4'-isopropylidine-bis[(2,6-dibromophenoxy)ethoxy-2-ethanol], 4,4'-isopropylidine-bis[(2,6-dibromophenoxy)ethanol], 4,4'-isopropylidine-bis(phenoxyethoxy-2-ethanol), and 4,4'-isopropylidine-bis(phenoxyethanol) to the said thermoplastic polyester resins. Preferred among these polyester resins are polyalkylene terephthalates such as polybutyrene terephthalate, polypropylene terephthalate and polyethylene terephthalate, in which polybutyrene terephthalate is the especially preferred.

In producing a thin-walled flame-retardant molded product according to the present invention by using polybutyrene terephthalate as the thermoplastic polyester resin (A), intrinsic viscosity of the polybutyrene terephthalate is not specifically restricted, but usually it is in the range of 0.5 to 1.2 dl/g, preferably not more than 1.0 dl/g, more preferably not more than 0.9 dl/g. Intrinsic viscosity shown in the present invention is the value determined by an Ubbellohde viscometer at 30°C after dissolving the specimen in a 1 : 1 (by weight) mixed solvent of phenol and 1,1,2,2-tetrachloroethane. The intrinsic viscosity of thermoplastic polyester resins (A) other than polybutyrene terephthalate is usually not less than 0.3 dl/g, preferably not less than 0.4 dl/g and usually not more than 1.5 dl/g, preferably not more than 1.2 dl/g.

Examples of the bromine-containing aromatic compounds usable as component (B) in the present invention include the bromine compounds generally known as halogen-based flame retardants, for example, tetrabromodisphenol A type epoxy oligomers or polymers, tetrabromobisphenol A type polycarbonate oligomers or polymers, pentabromobenzyl polyacrylate, polybromophenyl ether, polystyrene bromide, and imide compounds such as ethylene-bistetrabromophtalimide. The content of the bromine-containing aromatic compound (B) in the composition of the present invention is usually not less than 3 parts by weight, preferably not less than 5 parts by weight, but usually not more than 50 parts by weight, preferably not more than 30 parts by weight, based on 100 parts by weight of the thermoplastic polyester resin (A). If the amount of the bromine-containing aromatic compound is less than 3 parts by weight, the desired flame retarding effect may not be obtained. Also, the amount of bromine-containing aromatic compound is more than 50 parts by weight mechanical strength of the molded products may be reduced or thermal stability of the composition when melted may be deteriorated.

The antimony oxide compound (C) used in the present invention is a flame retardant assistant used in combination with the bromine-containing aromatic compound (B). For example, antimony oxides such as antimony trioxide (Sb₂O₃), antimony tetroxide (Sb₂O₄) and antimony pentoxide (Sb₂O₅), and antimonates such as sodium antimonate pentoxide can be used as compound (C). The content of the antimony oxide compound (C) in the composition of the present invention is usually not less than 2 parts by weight, preferably not less than 3 parts by weight, but usually not more than 30 parts by weight, preferably not more than 15 parts by weight, based on 100 parts by weight of the thermoplastic polyester resin (A). If the amount of the antimony oxide compound is less than 2 parts by weight, the desired flame retarding effect may not be obtained. On the other hand, if the amount of the antimony oxide compound is more than 30 parts by weight mechanical strength of the molded product may be reduced or thermal stability of the composition when melted may be deteriorated.

Polytetrafluoroethylene having fibril-forming properties (D) used as anti-dripping agent in the present invention is a substance which is easily dispersed in the polymer and induces intanglement of the polymer particles to help form a fibrous material. Polytetrafluoroethylene having fibril-forming properties belongs to Type 3 in classification according to ASTM standards. As such polytetrafluoroethylene having fibril-forming properties, it is possible to use the commercial products such as, for example, "POLYFLON FA-500", "F-201L" and "M-18" produced by Daikin Industries, Ltd., "Fluon CD-123" produced by Asahi Glass Co., Ltd., and "Teflon (R) 6J" produced by Mitsui Du Pont Fluorochemical Co., Ltd. (The quoted names are all trade names).

The content of polytetrafluoroethylene having fibril-forming properties (D) in the composition of the present invention may be lower than the usual usage; it is usually not less than 0.1 part by weight, preferably not less than 0.5 parts by weight, but usually not more than 3 parts by weight, preferably not more than 2 parts by weight, based on 100 parts by weight of the thermoplastic polyester resin (A). If the amount of polytetrafluoroethylene having fibril-forming properties is less than 0.1 part by weight, the intended effect of the present invention may fail to manifest, while if the amount of polytetrafluoroethylene having fibril-forming properties is more than 3 parts by weight, adverse effect may be given to workabilities such as extrudability and moldability of the composition, and appearance of the molded product.

Lamellar filler (E) used in the present invention is an inorganic filler which may have various shapes such as leaflike, flaky, thin piece, etc. Especially, the compounds having such shapes and also containing SiO₂ units in their chemical composition are preferably used. Examples of such compounds are magnesium silicate, aluminum silicate, calcium silicate, talc, mica, kaolin, diatom earth, clay, smectites and the like. These compounds may be either natural or synthetic products as far as they have a lamellar shape. Among the compounds mentioned above, talc, mica, clay and kaolin are preferred, with talc being especially preferred. In the present invention, the average particle size of the lamellar filler is not specifically restricted, but it is usually not less than 0.01 µm, preferably not less than 0.3 µm, but usually not more than 100 µm, preferably not more than 40 µm. If the average particle size is less than 0.01 µm, the effect of improving strength of the molded product obtained from the composition of the present invention may prove unsatisfactory, and if the average particle size is more than 100 µm, the product tends to deteriorate in toughness and appearance.

The lamellar filler used in the present invention may be treated with a surface treating agent such as silane coupling agents or titanate-based coupling agents. The silane coupling agents usable for the purpose include, for example, epoxy-based silanes, amino-based silanes and vinyl-based silanes. The titanate-based coupling agents include monoalkoxy type, chelate type and coordinate type. Known methods can be used for the surface treatment with a coupling agent such as mentioned above. The content of the lamellar filler (E) in the composition of the present invention is usually not less than 0.7 parts by weight, preferably not less than 1 part by weight, but usually not more than 8 parts by weight, preferably not more than 7 parts by weight, based on 100 parts by weight of the thermoplastic polyester resin. If the amount of the lamellar filler is less than 0.7 parts by weight or more than 8 parts by weight, the intended effect of the present invention may not be attained, and the composition may be impaired in flame retardancy. The lamellar filler (E), when used singly in an amount within the above-defined range, does not contribute to the improvement of flame retardancy, especially anti-dripping effect. In the present invention, such a small amount of lamellar filler is used in combination with polytetrafluoroethylene (D) to attain a satisfactory anti-dripping effect with a reduced amount of (D), making it possible to afford high-degree flame retardancy to the thermoplastic polyester-based resin compositions without deteriorating fluidity of the compositions or appearance of their molded products.

The thermoplastic polyester-based resin composition of the present invention may contain a glass reinforcement (F) in addition to the above-described components (A) to (E). For instance, glass beads, glass flakes, glass fibers and such can be used as the glass reinforcement (F). The content of the glass reinforcement (F) in the composition is usually not less than 9 parts by weight, preferably not less than 20 parts by weight, but usually not more than 100 parts by weight, preferably not more than 80 parts by weight, based on 100 parts by weight of the thermoplastic polyester resin (A). If the amount of the glass reinforcement is less than 9 parts by weight, the molded product may not be provided with satisfactory rigidity and heat resistance. If the amount of the glass reinforcement is more than 100 parts by weight, the composition may be deprived of sufficient fluidity for conducting injection molding, and also tends to deteriorate in mechanical properties.

The thermoplastic polyester-based resin composition according to the present invention may further contain, beside the above-mentioned components (A) to (F), other commonly used additives (for example, various types of elastomer, stabilizer, antioxidant, weathering agent, lubricant, releasing agent, nucleating agent, plasticizer, antistatic agent, colorant, etc.) within limits not prejudicial to the characteristic properties (fluidity and flame retardancy) of the composition. These additives may be contained at the time of mixing or molding of the resin in an amount of usually 30 to 0.1 parts by weight based on 100 parts by weight of the resin composition. If necessary, other types of thermoplastic resin than the polyester resins, such as polycarbonates, polystyrene, polymethyl methacrylate, AS resins and ABS resins, may be blended in the composition in an amount of usually 80 to 1 parts by weight based on 100 parts by weight of the resin composition..

The method of producing the thermoplastic polyester-based flame-retardant resin composition of the present invention is not specifically defined; it is possible to use the various methods available in the art, for example, a simultaneous blending method in which the components (A) to (E) and, if necessary, the component (F) along with other additives are blended all together and made into pellets by a screw extruder, or a separate blending method in which first a thermoplastic polyester resin (A) is supplied to a screw extruder and melted, and then other components and additives are supplied from the separate supply port and mixed, the mixture being made into pellets.

The flame-retardant resin composition of the present invention has excellent flame retardancy as well as good mechanical properties and fluidity inherent in the polyester resins, and finds use as a material for a variety of industrial products, particularly electrical and electronic parts, automotive electronic parts and machine parts. It is especially notable that the flame-retardant resin composition of the present invention shows flame retardancy of the rank V-0 in UL-94 standards even when the composition is used for the thin-walled moldings, for examples, the moldings having a thin-wall portion with a thickness of less than 0.8 mm, so that it is suited as a material of the thin-walled molded products required to have high-degree flame retardancy, such as relay parts.

The method of molding the thermoplastic polyester-based resin composition of the present invention is not specifically defined; it is possible to use any of the various types of molding methods utilized for molding thermoplastic resins, such as injection molding, extrusion molding, rotational molding, blow molding and compression molding.

The thermoplastic polyester-based resin composition of the present invention has a good balance of strength, rigidity, heat resistance and impact resistance innately possessed by the polyester resins, and is also provided with excellent fluidity and flame retardancy. Further, the molded products of the composition of the present invention show flame retardancy of the rank V-0 in UL-94 standards at a thin-wall portion with a thickness of, for example, 0.8 mm or less, so that the composition is suited for use as a molding material of electric and electronic parts, for example relay parts, which are the thin-wall moldings and required to have high-degree flame retardancy.

### EXAMPLES

The present invention is further illustrated by the following examples which are shown here for the purpose of illustration. The following materials were used in the Examples and Comparative Examples described below.
(1) PBT: polybutyrene terephthalate "NOVADURAN 5008" produced by Mitsubishi Chemical Corporation, intrinsic viscosity = 0.85
(2) PET: polyethylene terephthalate "NOVAPET GV200" produced by Mitsubishi Chemical Corporation, intrinsic viscosity = 0.60
(3) PTT: polytrimethylene terephthalate "Sorona 3GT" produced by Du Pont, intrinsic viscosity = 1.04
(4) Flame retardant A: pentabromobenzyl polyacrylate "FR-1025" produced by Bromochem Far East Co., Ltd.
(5) Flame retardant B: tetrabromobisphenol A type epoxy resin "SR-T48" produced by Sakamoto Yakuhin Kogyo Co., Ltd.
(6) Flame retardant C: tetrabromobisphenol A type epoxy resin "CXB-300C" produced by Ushin Kobunshi Co., Ltd.
(7) Flame retardant D: tetrabromobisphenol A type polycarbonate resin "FR-53" produced by Mitsubishi Gas Chemical Company, Inc.
(8) Flame retardant assistant: antimony trioxide "AT-3CN" produced by Suzuhiro Chemical Co., Ltd.
(9) PTFE: polytetrafluoroethylene "Polyfuron M-18" produced by Daikin Industries Co., Ltd.
(10) Talc A: lamellar filler "Micron White 5000S" produced by Hayashi Kasei Co., Ltd., average particle size = 5 µm
(11) Talc B: lamellar filler "Talcan PKC" produced by Hayashi Kasei Co., Ltd., average particle size = 12 µm
(12) Mica: lamellar filler "micalet A-21B" produced by Yamaguchi Mica Co., Ltd., average particle size = 20 µm
(13) Kaolin: lamellar filler "SATINMTON No. 5" produced by Tsuchiya Kaolin Co., Ltd.
(14) Titanium oxide: Non-lamellar filler "CR-60" produced by Ishihara Sangyo Kaisha, Ltd., average particle size = 0.2 µm
(15) GF: glass fiber "T-187" produced by Nippon Electric Glass Co., Ltd., fiber diameter 13 µmφ

### Examples 1 to 7 and Comparative Examples 1 to 6

PBT was used as the thermoplastic polyester resin, blending other components at the ratios shown in Table 1 or Table 2, and the mixtures were extruded from a double-screw extruder (screw diameter 30 mm) at a speed of 150 rpm and a barrel temperature of 260°C to produce pellets. The obtained pellets were dried at 120°C for 6 to 8 hours and then immediately injection molded into the test pieces by an injection molding machine (Nestal SG75-SYCAP-MIIIA mfd. by Sumitomo Heavy Industries, Ltd.) at 255°C. The test pieces were subjected to the following evaluation test. Results are shown in Tables 1 to 4.

The evaluation test of the resin compositions was conducted in the following way.
(1) Tensile strength:
   Measured according to ISO 527-1 and ISO 527-2.
(2) Charpy impact strength:
   Measured according to ISO 179.
(3) Melt viscosity:
   Melt viscosity was measured by a capillary flowmeter (capillary: 1 mmØ x 30 mmL) at a barrel temperature of 270°C and a shear rate of 91.2/sec.
(4) Appearance of the molded products:
   1/64 inch (approximately 0.4 mm) thick test pieces were prepared, and their surfaces were checked for the presence or absence of any PTFE-derived agglomerate by visual observation.
   ○ : There was no agglomerate on the surface;
   ×: Agglomerate was present on the surface.
(5) Flame retardancy test:

1/32 inch (approximately 0.8mm) thick test pieces (5 pieces for each specimen) were prepared according to the test method shown in Underwriters Laboratories Incorporation's UL-94 "Combustion Test for Classification of Materials" (hereinafter simply referred to as UL-94). Based on the test results of the 5 test pieces, each specimen was ranked V-0, V-1 or V-2 according to UL-94 rating. The rating is roughly as follows.
- V-O:: The average flame retention time after removal of the ignition flame is less than 5 seconds, and all of the test pieces do not drop the particulate flame igniting absorbent cotton.
- V-1:: The average flame retention time after removal of the ignition flame is less than 25 seconds, and all of the test pieces do not drop the particulate flame igniting absorbent cotton.
- V-2:: The average flame retention time after removal of the ignition flame is less than 25 seconds and the test pieces drop the particulate flame igniting absorbent cotton.

UL-94 also stipulates that unless all of the test pieces come up to a specific V rank, the specimen should not be classified in this rank. In case where this condition is not met, the specimen is placed in the rank of the test piece which is the worst of the five test pieces in test result.

**Table 1**

| Composition (parts by weight) | Example 1 | Example 2 | Example 3 | Example 4 |
|---|---|---|---|---|
| PBT | 100 | 100 | 100 | 100 |
| Flame retardant A | 11.7 | - | - | - |
| Flame retardant B | - | 15.8 | - | - |
| Flame retardant C | - | - | 15.8 | - |
| Flame retardant D | - | - | - | 14.5 |
| Flame retardant assistant | 5.0 | 5.0 | 5.0 | 5.0 |
| PTFE | 0.9 | 0.9 | 0.9 | 0.9 |
| Talc A | 3.6 | 3.6 | 3.6 | 3.6 |
| Talc B | - | - | - | - |
| Mica | - | - | - | - |
| Kaolin | - | - | - | - |
| Titanium oxide | - | - | - | - |
| GF | 54 | 54 | 54 | 54 |
| Tensile strength (Mpa) | 127 | 128 | 127 | 126 |
| Charpy impact strength (kJ/m²) | 7.5 | 8.0 | 7.7 | 7.7 |
| Melt viscosity (Pa*s) | 334 | 391 | 328 | 343 |
| Appearance of molded products | ○ | ○ | ○ | ○ |
| Flame retardancy (UL standards) | V-0 | V-0 | V-0 | V-0 |

**Table 2**

| Composition (parts by weight) | Example 5 | Example 6 | Example 7 |
|---|---|---|---|
| PBT | 100 | 100 | 100 |
| Flame retardant A | - | - | - |
| Flame retardant B | - | | - |
| Flame retardant C | 15.8 | 15.8 | 15.8 |
| Flame retardant D | - | - | - |
| Flame retardant assistant | 5.0 | 5.0 | 5.0 |
| PTFE | 0.9 | 0.9 | 0.9 |
| Talc A | - | - | - |
| Talc B | 3.6 | - | - |
| Mica | - | 3.6 | - |
| Kaolin | - | - | 3.6 |
| Titanium oxide | - | - | - |
| GF | 54 | 54 | 54 |
| Tensile strength (Mpa) | 127 | 128 | 128 |
| Charpy impact strength (kJ/m²) | 7.7 | 7.4 | 7.8 |
| Melt viscosity (Pa*s) | 335 | 317 | 322 |
| Appearance of molded products | ○ | ○ | ○ |
| Flame retardancy (UL standards) | V-0 | V-0 | V-0 |

**Table 3**

| Composition (parts by weight) | Comp. Example 1 | Comp. Example 2 | Comp. Example 3 |
|---|---|---|---|
| PBT | 100 | 100 | 100 |
| Flame retardant A | - | - | - |
| Flame retardant B | - | | - |
| Flame retardant C | 15.8 | 15.8 | 15.8 |
| Flame retardant D | - | - | - |
| Flame retardant assistant | 5.0 | 5.0 | 5.0 |
| PTFE | 0.9 | 0.9 | 0.9 |
| Talc A | - | 0.6 | 10.0 |
| Talc B | - | - | - |
| Mica | - | - | - |
| Kaolin | - | - | - |
| Titanium oxide | - | - | - |
| GF | 54 | 54 | 54 |
| Tensile strength (Mpa) | 130 | 130 | 117 |
| Charpy impact strength (kJ/m²) | 7.9 | 8.0 | 6.6 |
| Melt viscosity (Pa*s) | 322 | 327 | 352 |
| Appearance of molded products | ○ | ○ | ○ |
| Flame retardancy (UL standards) | V-2 | V-2 | V-1 |

**Table 4**

| Composition (parts by weight) | Comp. Example 4 | Comp. Example 5 | Comp. Example 6 |
|---|---|---|---|
| PBT | 100 | 100 | 100 |
| Flame retardant A | - | - | - |
| Flame retardant B | - | | - |
| Flame retardant C | 15.8 | 15.8 | 15.8 |
| Flame retardant D | - | - | - |
| Flame retardant assistant | 5.0 | 5.0 | 5.0 |
| PTFE | 0.9 | - | 4.0 |
| Talc A | - | 3.6 | 10.0 |
| Talc B | - | - | - |
| Mica | - | - | - |
| Kaolin | - | - | - |
| Titanium oxide | 3.6 | - | - |
| GF | 54 | 54 | 54 |
| Tensile strength (Mpa) | 123 | 130 | 127 |
| Charpy impact strength (kJ/m²) | 6.9 | 8.1 | 7.7 |
| Melt viscosity (Pa*s) | 305 | 305 | 446 |
| Appearance of molded products | ○ | ○ | X |
| Flame retardancy (UL standards) | V-2 | V-2 | V-0 |

### Example 8

The same procedure as defined in Example 3 was conducted except for use of 100 parts by weight of PET as the thermoplastic polyester resin to prepare a resin composition, and it was injection molded at a molding temperature of 275°C to make the test pieces and evaluated as in Example 3. The test pieces had good appearance (no agglomerate on the surface)and gave the following evaluation results.
Tensile strength: 145 MPa
Charpy impact strength: 5.6 kJ/m²
Flame retardancy: V-0

### Example 9

The same procedure as defined in Example 3 was conducted except for use of 100 parts by weight of PTT as the thermoplastic polyester resin to prepare a resin composition, and it was injection molded at a molding temperature of 265°C to make the test pieces and evaluated as in Example 3. The test pieces had good appearance (no agglomerate on the surface) and gave the following evaluation results.
Tensile strength: 140 MPa
Charpy impact strength: 6.0 kJ/m²
Flame retardancy: V-O

## Claims

1. A thermoplastic polyester-based flame-retardant resin composition comprising (A) 100 parts by weight of a thermoplastic polyester resin, (B) 3 to 50 parts by weight of a bromine-containing aromatic compound, (C) 2 to 30 parts by weight of an antimony oxide compound, (D) 0.1 to 3 parts by weight of polytetrafluoroethylene having fibril-forming abilities, and (E) 0.7 to 8 parts by weight of an lamellar filler, wherein the thermoplastic polyester resin is an aromatic thermoplastic polyester resin and wherein the lamellar filler is an inorganic lamellar filler.

2. A flame-retardant resin composition according to claim 1, further comprising (F) 9 to 100 parts by weight of a glass reinforcement.

3. A flame-retardant resin composition according to claim 1 or 2, wherein the lamellar filler (E) is a silicate compound.

4. A flame-retardant resin composition according to any one of claims 1 to 3, wherein the thermoplastic polyester resin (A) is polyalkylene terephthalate.

5. A flame-retardant resin composition according to any one of claims 1 to 4, wherein the lamellar filler (E) is one or more of the silicate compounds selected from talc, mica, clay and kaolin.

6. A flame-retardant resin composition according to any one of claims 1 to 5, wherein the bromine-containing aromatic compound (B) is one or more of the compounds selected from tetrabromobisphenol A type epoxy oligomers or polymers, tetrabromobisphenol A type polycarbonate oligomers or polymers, pentabromobenzyl polyacrylates and polystyrene bromide.

7. Molded products having at least one thin-wall portion with a thickness of less than 0.8 mm, obtained by molding the thermoplastic polyester-based resin composition as defined in any one of claims 1 to 6.

8. The molded products as defined in claim 7, which are relay parts.

## Patentansprüche

1. Thermoplastische Polyester-basierte flammhemmende Harzzusammensetzung, die (A) 100 Gew.-Teile eines thermoplastischen Polyesterharzes, (B) 3 bis 50 Gew.-Teile einer Brom enthaltenden aromatischen Verbindung, (C) 2 bis 30 Gew.-Teile einer Antimonoxidverbindung, (D) 0,1 bis 3 Gew.-Teile Polytetrafluorethylen, das die Fähigkeit zur Fibrillen-Bildung aufweist, und (E) 0,7 bis 8 Gew.-Teile eines lamellaren Füllstoffs umfasst, worin das thermoplastische Polyesterharz ein aromatisches thermoplastisches Polyesterharz ist und worin der lamellare Füllstoff ein anorganischer lamellarer Füllstoff ist.

2. Flammhemmende Harzzusammensetzung gemäß Anspruch 1, die weiterhin (F) 9 bis 100 Gew.-Teile einer Glasverstärkung umfasst.

3. Flammhemmende Harzzusammensetzung gemäß Anspruch 1 oder 2, worin der lamellare Füllstoff (E) eine Silicatverbindung ist.

4. Flammhemmende Harzzusammensetzung gemäß einem der Ansprüche 1 bis 3, worin das thermoplastische Polyesterharz (A) Polyalkylenterephthalat ist.

5. Flammhemmende Harzzusammensetzung gemäß einem der Ansprüche 1 bis 4, worin der lamellare Füllstoff (E) eine oder mehrere der Silicatverbindungen ist, die aus Talk, Glimmer, Ton und Kaolin ausgewählt sind.

6. Flammhemmende Harzzusammensetzung gemäß einem der Ansprüche 1 bis 5, worin die Brom enthaltende aromatische Verbindung (B) eine oder mehrere der Verbindungen ist, die aus Epoxy-Oligomeren oder -Polymeren vom Tetrabrombisphenol A-Typ, Polycarbonat-Oligomeren oder -Polymeren vom Tetrabrombisphenol A-Typ, Pentabrombenzylpolyacrylaten und Polystyrolbromid ausgewählt sind.

7. Formkörper, die zumindest einen dünnwandigen Bereich mit einer Dicke von weniger als 0,8 mm aufweisen, die durch Formen der thermoplastischen Polyester-basierten Harzzusammensetzung wie in einem der Ansprüche 1 bis 6 definiert erhalten werden.

8. Formkörper gemäß Anspruch 7, die Relais-Bauteile sind.

## Revendications

1. Composition de résine retardatrice de flamme à base de polyester thermoplastique comprenant : (A) 100 parties en poids d'une résine polyester thermoplastique ; (B) entre 3 et 50 parties en poids d'un composé aromatique qui contient du brome ; (C) entre 2 et 30 parties en poids d'un composé d'oxyde d'antimoine ; (D) entre 0,1 et 3 parties en poids de polytétrafluoroéthylène qui présente des capacités de formation de fibrilles ; et (E) entre 0,7 et 8 parties en poids d'un matériau de remplissage lamellaire, dans lequel la résine polyester thermoplastique est une résine polyester thermoplastique aromatique et dans lequel le matériau de remplissage lamellaire est un matériau de remplissage lamellaire inorganique.

2. Composition de résine retardatrice de flamme selon la revendication 1, comprenant en outre : (F) entre 9 et 100 parties en poids de matériau de renforcement en verre.

3. Composition de résine retardatrice de flamme selon la revendication 1 ou la revendication 2, dans lequel le matériau de remplissage lamellaire (E) est un composé de silicate.

4. Composition de résine retardatrice de flamme selon l'une quelconque des revendications 1 à 3, dans lequel la résine polyester thermoplastique (A) est un polyalkylène téréphtalate.

5. Composition de résine retardatrice de flamme selon l'une quelconque des revendications 1 à 4, dans lequel le matériau de remplissage lamellaire (E) est formé par un ou plusieurs composés de silicate sélectionnés dans le groupe constitué par le talc, le mica, l'argile et le kaolin.

6. Composition de résine retardatrice de flamme selon l'une quelconque des revendications 1 à 5, dans lequel le composé aromatique qui contient du brome (B) est formé par un ou plusieurs composés sélectionnés dans le groupe constitué par des polymères ou des oligomères époxy de type tétrabromobisphénol A, des polymères ou des oligomères polycarbonate de type tétrabromobisphénol A, des pentabromobenzyles polyacrylates et du bromure de polystyrène.

7. Produits moulés qui présentent au moins une partie à paroi mince qui présente une épaisseur inférieure à 0,8 mm, obtenus en moulant la composition de résine à base de polyester thermoplastique selon l'une quelconque des revendications 1 à 6.

8. Produits moulés selon la revendication 7, qui sont des éléments relais.
